(19) Europäisches Patentamt
European Patent Office
Office européen des brevets

(11) Publication number : **0 491 482 A1**

(12) **EUROPEAN PATENT APPLICATION**

(21) Application number : **91311105.0**

(51) Int. Cl.$^5$ : **C08K 5/57**, C08L 83/04

(22) Date of filing : **29.11.91**

(30) Priority : **17.12.90 US 628312**

(43) Date of publication of application :
**24.06.92 Bulletin 92/26**

(84) Designated Contracting States :
**BE DE ES FR GB NL**

(71) Applicant : **GENERAL ELECTRIC COMPANY**
**1 River Road**
**Schenectady, NY 12345 (US)**

(72) Inventor : **Lucas, Gary Morgan**
**21 Saint Anthony Lane**
**Scotia, New York 12302 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Room temperature vulcanizable silicone compositions having improved low modulus.**

(57) Scavenger-reduced, one-component room temperature vulcanizableorganopolysiloxane compositions having improved low modulus properties are provided, comprising a polyalkoxy-terminated organopolysiloxane, a low modulus-enhancing additive which is a low viscosity monoalkoxy-terminated polydiorganosiloxane, a diorganotin bis beta-diketonate condensation catalyst, and a silicon nitrogen scavenger for hydroxy groups. In preferred embodiments, the RTV composition further comprises filler, a polyalkoxy silane cross-linking agent, an adhesion promoting polyalkoxysilane, and a cyano-functional polyalkoxy silane processing aid.

EP 0 491 482 A1

The present invention relates to one-component, scavenger-reduced, room temperature vulcanizable silicone compositions. More particularly, the present invention relates to additives which improve the low modulus properties of one-component, scavenger-reduced room temperature vulcanizable silicone compositions.

One-component, alkoxy-curing, room temperature vulcanizable (RTV) silicone rubber compositions containing low modulus-enhancing additives are known in the art. Reference is made, for example, to U.S. Patent No. 4,323,489 (Beers), wherein the low modulus-enhancing agent is a difunctional acetamide coupler.

The present invention is based on the discovery that the low modulus properties of a one-component, scavenger-reduced, RTV silicone rubber composition can be improved by the presence therein of a low molecular weight, monoalkoxy-terminated diorganopolysiloxane, described in greater detail hereinbelow.

The use of monoalkoxy-terminated diorganopolysiloxanes in one-component, RTV silicone rubber compositions is known in the art. Reference is made, for example, to U.S. Patent Nos. 4,593,085; 4,670,532; and 4,755,578, all to Lucas et al. (Lucas).

In the Lucas patents, the monoalkoxy-terminated diorganopolysiloxane is present as an unwanted contaminant and not as a low modulus enhancing agent. In addition, the monoalkoxy-terminated diorganopolysiloxanes used in the Lucas RTV compositions have a viscosity of 100 to 1,000,000 centipoise at 25°C.

The present invention is based on the discovery that a monoalkoxy-terminated diorganopolysiloxane having a viscosity of from about 5 to about 95 centipoise at 25°C will enhance the low modulus properties of a one-component RTV silicone composition made with the monoalkoxy-terminated polydiorganosiloxane.

## Summary of the Invention

The present invention provides a scavenger reduced, shelf-stable, one-component room temperature vulcanizable silicone composition having improved low modulus properties, comprising:

(A) 100 parts of a polyalkoxy-terminated polydiorgano-siloxane having a viscosity of from about 100 to about 1,000,000 centipoise at 25°C, wherein the silicon atoms at each polymer chain end is terminated with at least two alkoxy radicals, the organic group being a $C_{1-15}$ monovalent hydrocarbon radical;

(B) from about 1 to about 40 parts of a monoalkoxy-terminated polydiorganosiloxane polymer having on each terminal silicon atom in the polymer chain just one alkoxy group and having a viscosity varying in the range of from about 5 to about 95 centipoise at 25°C, the organo group being a monovalent $C_{1-15}$ hydrocarbon radical;

(C) an effective amount of a diorganotin bis beta-diketonate condensation catalyst of the general formula:

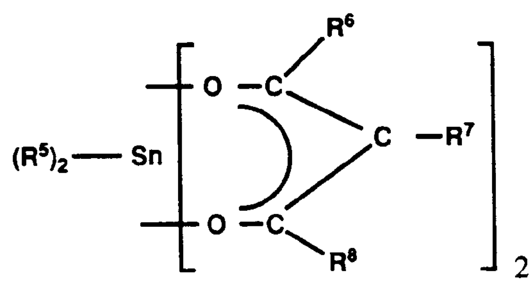

wherein $R^5$ is selected from $C_{(1-18)}$ monovalent hydrocarbon radicals and substituted monovalent hydrocarbon radicals, and $R^6$, $R^7$, and $R^8$ are the same or different monovalent radicals selected from the class consisting of hydrogen, $R^5$, $OR^5$, $-Si(R^5)_3$, $-OSi(R^5)_3$, aryl, acyl, and nitrile;

(D) from about from about 0.1 to about 1.0 part of a scavenger compound for hydroxy-functional groups;

(E) from 0 to about 2 parts of an adhesion promoting polyalkoxysilane having the formula

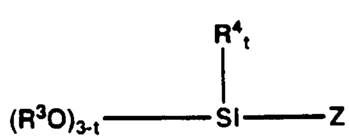

wherein $R^3$ and $R^4$ are $C_{(1-8)}$ monovalent hydrocarbon radicals, "t" varies from 0 to 3, and Z is a saturated, unsaturated or aromatic hydrocarbon radical, the radical being further functionalized by a member selected from the group consisting of ether, epoxy, isocyanato, cyano, isocyanurate, acryloxy and acyloxy; and

(F) 0 to about 10 parts of a crosslinking polyalkoxy silane.

Detailed Description of the Invention

Component (A) of the composition of the present invention is a diorganopolysiloxane polymer terminated at each end of the polymer chain by at least two alkoxy radicals and having a viscosity varying from about 100 to about 1,000,000 centipoise at 25°C and preferably from about 5000 to about 200,000 centipoise at 25°C. The organic group of the polymer is a $C_{1-15}$ monovalent hydrocarbon radical.

Preferably, the polymer constituting component (A) has the general formula:

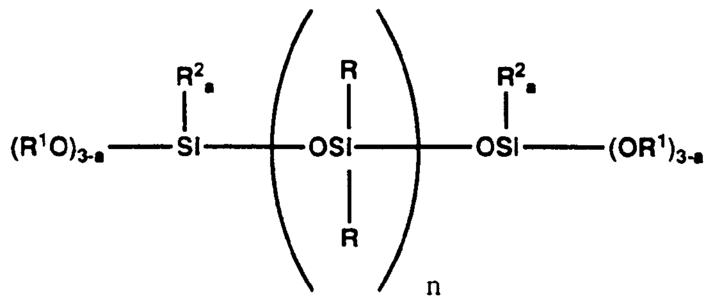

wherein each R and $R^2$ is independently a substituted or unsubstituted $C_{(1-15)}$ monovalent hydrocarbon radical, $R^1$ is a $C_{(1-8)}$ aliphatic organic radical selected from alkyl radicals, alkylether radicals, alkylester radicals, alkylketone radicals, alkylcyano radicals, or a $C_{(7-15)}$ aralkyl radical; n is a whole number ranging from about 50 to about 2500, and "a" is a whole number which is either 0 or 1.

In formula (I), R is preferably selected from $C_{(1-13)}$ monovalent hydrocarbon radicals, halogenated hydrocarbon radicals, and cyanoalkyl radicals; $R^1$ is preferably a $C_{(1-8)}$ alkyl radical or a $C_{(7-13)}$ aralkyl radical; and $R^2$ is preferably methyl, phenyl, or vinyl. Most preferably, R, $R^1$, and $R^2$ are each methyl.

The terminal silicon atom in the polymer of component (A) must have at least two alkoxy groups and can have as many as three alkoxy groups in accordance with the above description.

The polyalkoxy-terminated organopolysiloxane of formula (I) can be made by various procedures. One procedure is taught by Cooper et al., U.S. Patent No. 3,542,901, involving the use of a polyalkoxysilane with a silanol-terminated polydiorganosiloxane in the presence of an amine catalyst.

The polymer of formula (I) is preferably produced according to the method described in U.S. Patent No. 4,515,932 to Chung, which is hereby incorporated by reference herein. In the Chung method, the polymer is prepared by reacting a silanol terminated diorganopolysiloxane polymer having a viscosity in the range of 100 to 1,000,000 centipoise at 25°C where the organic group is a monovalent hydrocarbon group with a polyalkoxy cross-linking agent of the formula

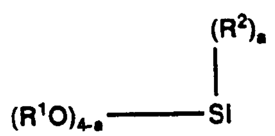

in the presence of an end-coupling catalyst where $R^1$, $R^2$ and "a" are as previously defined.

The silanol terminated polymer used in preparing the polymer of formula (I) according to the Chung method preferably has the formula:

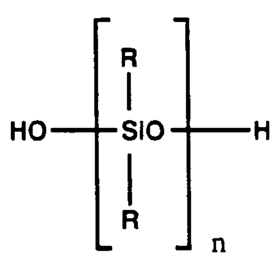

where R and "n" are as previously defined.

The end-coupling reaction wherein the polymer of formula (I) is formed according to the Chung method is carried out by mixing the alkoxy silane with the silanol terminated diorganopolysiloxane polymer or polymers in the presence of an end-coupling catalyst selected from the class consisting of Bronsted acids, Lewis acids, stearic acid treated calcium carbonate, and amines and mixtures thereof. The amines can be either primary, secondary, or tertiary amines. The more basic the amine the better it is as a catalyst. The most preferred catalyst is one of the acids indicated above and most preferably is a combination of one of the acids with an amine. After end-coupling is complete, a silazane (for example, hexamethyldisilazane) is added to quench the amine salt catalyst, providing a shelf-stable polymer. For more information as to such catalysts and the end-coupling reactions one is referred to the disclosure of Chung, U.S. Patent No. 4,515,932, which was previously incorporated by reference herein.

Component (B) is a polydiorganosiloxane polymer having on each terminal silicon atom in the polymer chain just one alkoxy group and having a viscosity varying in the range of from about 5 to about 95, preferably from about 10 to about 80, and most preferably from about 40 to about 60, centipoise at 25°C, the organo group being a monovalent $C_{1-15}$ hydrocarbon radical.

The monoalkoxy-terminated polymer preferably has the formula

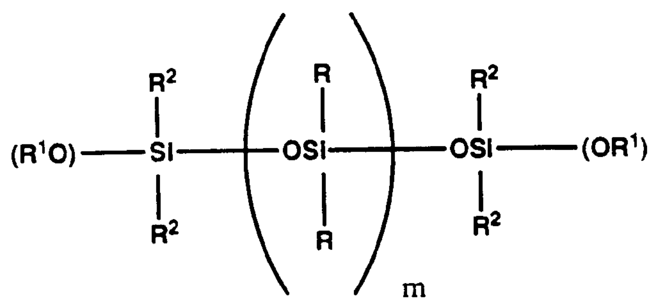

wherein R, $R^1$, and $R^2$ are as previously defined. The value of "m" ranges from about 1 to about 40, preferably from about 5 to about 30, and most preferably from about 10 to about 20.

The polymer of formula (II) is formed by reacting in the presence of an end-coupling catalyst a silanol-terminated diorganopolysiloxane polymer having a viscosity in the range of from about 100 to about 1,000,000 centipoise at 25°C. with a dialkoxysilane of the formula

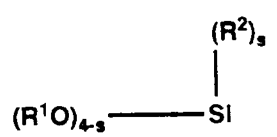

where $R^1$ and $R^2$ are as previously defined, and "s" is a whole number that is 2.

The silanol terminated polymer used to prepare the polymer of formula (II) is the same as that used to prepare the polymer of formula (I).

The end-coupling reaction is carried out in the same manner as described above for the polymer of formula (I), i.e., mixing the alkoxysilane with the silanol-terminated diorganopolysiloxane polymer in the presence of an end-coupling catalyst selected from the class consisting of Bronsted acids, Lewis acids, stearic acid treated calcium carbonate, and amines and mixtures thereof.

The monoalkoxy-terminated polydiorganosiloxane of formula (II) is present in the RTV composition of this invention in an amount ranging from about 1 to about 40, preferably from about 10 to about 30, and more preferably from about 15 to about 25, parts per 100 parts of the polyalkoxy-terminated polydiorganosiloxane (A).

Component (C) is a diorganotin-bis-diketonate condensation catalyst of the general formula:

(III)

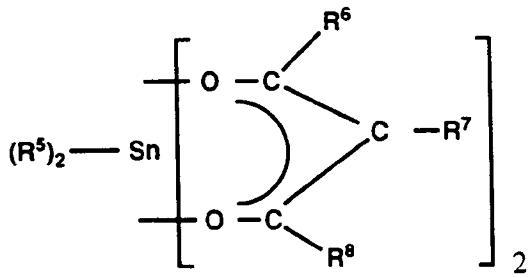

wherein $R^5$ is selected from $C_{(1-18)}$ monovalent hydrocarbon radicals and substituted monovalent hydrocarbon radicals, and $R^6$, $R^7$, and $R^8$ are the same or different monovalent radicals selected from the class consisting of hydrogen, $R^5$, $OR^5$, $-Si(R^5)_3$, $-OSi(R^5)_3$, aryl, acyl, and nitrile.

Radicals included within $R^5$ of formula (III) are, for example, $C_{(6-13)}$ aryl radicals and halogenated aryl radicals, such as phenyl, tolyl, chlorophenyl, naphthyl; $C_{(1-18)}$ aliphatic, cycloaliphatic radicals, and halogenated derivatives thereof, for example, cyclohexyl, cyclobutyl; alkyl and alkenyl radicals, such as methyl, ethyl, propyl, chloropropyl, butyl, pentyl, hexyl, heptyl, octyl, vinyl, allyl, and trifluoropropyl.

Some of the tin condensation catalysts included within formula (III) are, for example:

Di(n-butyl)tinbis(acetylacetonate);
Di(n-butyl)tinbis(benzoylacetonate):
Di(ethyl)tinbis(lauroylacetonate);
Di(methyl)tinbis(pivaloylacetonate);
Di(n-octyl)tinbis(acetylacetonate);
Di(n-propyl)tinbis(1,1,1-trifluoroacetylacetonate);
Di(n-butyl)tinbis(ethylacetoacetate); and
Di(n-butyl)tin(acetylacetonate)(ethylacetoacetate).

The preferred tin catalyst for use in the present invention is di(n-butyl)tinbis(acetylacetonate).

Effective amounts of the catalyst are typically within the range of from about 0.01 to about 2.0, preferably about 0.1 to about 1.0, and most preferably from about 0.2 to about 0.4, parts per 100 parts of the polyalkoxy-terminated polydiorganosiloxane (A).

Component (D) is a silicone scavenger compound for hydroxy-functional groups.

The scavenger can be any scavenger that is known in the art. A scavenger in this application is defined as any compound having a functional group that will tie up and react with free hydroxy groups in the composition and bond with the hydroxy groups and prevent them from reacting with alkoxy groups in the composition. In this respect, the scavenger can be an integrated crosslinker, scavenger as will be explained below which contains alkoxy groups as well as scavenging groups.

Suitable scavenger compounds for use in the RTV compositions of the present invention are disclosed, for example, in U.S. Patent Nos. 4,895,918 (Lucas); 4,417,042 (Dziark); 4,467,063 (Lockhart); 4,477,625 (Lockhart); 4,499,229 (Lockhart); 4,499,230 (Lockhart); 4,395,526 (White et al.); and 4,472,551 (White et al.), all of which are incorporated by reference herein.

Suitable scavengers for use in this invention include, for example, non-cyclic silanol scavengers and cyclic silyl nitrogen scavengers, which are disclosed in U.S. Patent No. 4,895,918 to Lucas, which was above incorporated by reference herein.

Another class of scavenging compounds that can be used as scavengers in the RTV compositions of this invention is a silane having the formula

(IV)

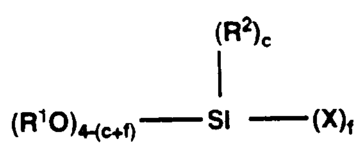

wherein $R^1$ and $R^2$ are as previously defined, and X is a hydrolyzable leaving group selected from the group

consisting of silazy, cyclic amido, amido, amino, carbamato, enoxy, imidato, isocyanato, oximato, thioisocyanato, and ureido radicals, and "c" is a whole number equal to 0 to 3 inclusive, "f" is an integer equal to 1 to 4 inclusive and the sum of c+f is equal to 1 to 4 inclusive.

Scavengers within the scope of formula (IV) are disclosed, for example, in U.S. Patent Nos. 4,895,918 to Lucas and 4,395,526 to White et al., which were both previously incorporated by reference herein.

Also suitable for use in the present invention are the N-silyl-substituted imidazoles disclosed in U.S. Patent No. 4,467,063 (Lockhart); the zeolites disclosed in U.S. Patent No. 4,499,230 (Lockhart); and the organic scavengers taught in U.S. Patent No. 4,472,551 (White et al), which were all previously incorporated by reference herein.

Other suitable scavengers include, for example, the silicon-containing scavengers disclosed in U.S. Patent Nos. 4,499,229 and 4,477,625, both to Lockhart, which were both previously incorporated by reference herein.

These silicon-containing scavengers have the general formula

$$\equiv Si-(X)_d$$

wherein X is as previously defined, d is a whole number equal to 0 to 4 inclusive, and the remaining valences of Si other than those which can be satisfied by X can be satisfied by atoms selected from Si, H, C, O, N, P, S, transition elements IIIa, IVa, Va, VIa, VIIa, and VIII and mixtures thereof.

The preferred scavenger for use in the RTV compositions of this invention is a silicon-nitrogen compound selected from the class consisting of:

(a) a silicone-nitrogen compound having the formula

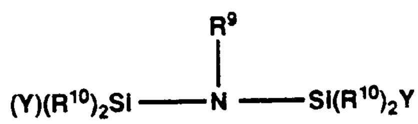

where Y is selected from $R^{10}$ and $(R^9)_2N$-; and

(b) A silicon-nitrogen polymer comprising (1) from 3 to 100 mole percent chemically combined structural units selected from the class consisting of units having the formulae

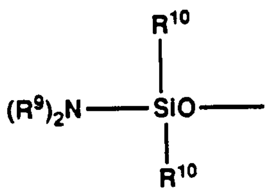 , 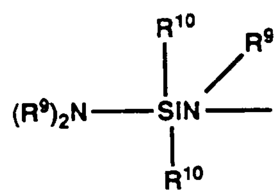 ,

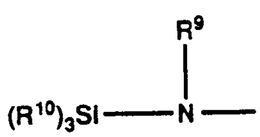 , 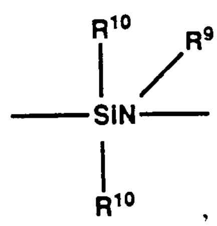 ,

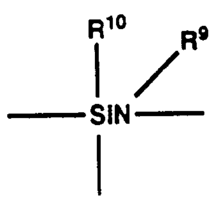 , and 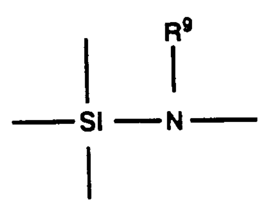

and (2) from 0 to 97 mole percent chemically combined structural units represented by the formula

$$(R^{10})_cSiO_{(4-c/2)}$$

where the silicon atoms of the silicon-nitrogen polymer are joined to each other by a member selected from a SiOSi linkage and a $SiNR^9Si$ linkage, the free valences of the silicon atoms other than those joined to oxygen to form a siloxy unit and nitrogen to form a silazy unit are joined to a member selected from an $R^{10}$ radical and an $(R^9)_2N$ radical, and where the ratio of the sum of the $R^{10}$ radicals and the $(R^9)_2N$ radicals to the silicon atoms of the silicon-nitrogen polymer has a value of 1.5 to 3, inclusive, and $R^9$ is a member selected from the group consisting of hydrogen, monovalent hydrocarbon radicals, and fluoroalkyl radicals, $R^{10}$ is a member selected from the group consisting of hydrogen, monovalent hydrocarbon radicals, and fluoroalkyl radicals, and c is a whole number equal to 0 to 3, inclusive.

Examples of silicon-nitrogen compounds within the formulae above and suitable for use in the present invention are disclosed in U.S. Patent No. 4,417,042 (Dziark), which was previously incorporated by reference herein. These compounds include the silazanes and hydrogen-containing amines.

The preferred silicon-nitrogen scavenger compounds for use in this invention are the disilazanes and the polysilazanes. Examples of suitable silazanes include hexamethylcyclotrisilazane, octamethyltetrasilazane, trimethyltriphenylcyclotrisilazane, and trivinyltrimethylcyclotrisilazane, and the like. The most preferred polysilazane for use in this invention is hexamethylcyclo-N-methyltrisilazane and the most preferred disilazane is hexamethyldisilazane.

The scavenger is present in the composition of this invention in an amount within the range of from about 0.1 to about 1.0, preferably about 0.2 to about 0.8, and most preferably from about 0.5 to about 0.7, parts per 100 parts of the polyalkoxy-terminated polydiorganosiloxane (A).

The preferred silicon-nitrogen scavenger compounds for use in this invention are the silazanes, such as the disilazanes and the polysilazanes. Examples of suitable silazanes include but are not limited to hexamethylcyclotrisilazane, octamethyltetrasilazane, trimethyltriphenylcyclotrisilazane, and trivinyltrimethylcyclotrisilazane, and the like. The most preferred silazane for use in this invention is hexamethyldisilazane.

The RTV composition optionally contains (E) is an adhesion promoting organo-functional polyalkoxysilane having the general formula:

(V)

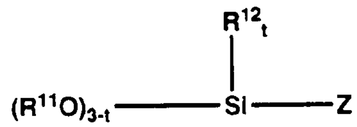

wherein $R^{11}$ and $R^{12}$ are $C_{1-8}$ monovalent hydrocarbon radicals, "t" varies from 0 to 3 and Z is a saturated, unsaturated, or aromatic hydrocarbon residue which may be further functionalized by a member selected from the class consisting of ether, epoxy, isocyanato, cyano, acryloxy, and acyloxy.

Adhesion promoting compounds within the scope of formula (V) above and suitable for use in the present invention, as well as methods for preparing them, are disclosed, for example, in U.S. Patent Nos. 4,483,973 and 4,528,353 (Lucas et al.), which are both hereby incorporated by reference herein.

The preferred adhesion promoter is an isocyanato-functional polyalkoxy silane.

Isocyanato-functional polyalkoxy silanes suitable for use in the present invention may have the general formula:

(VI)

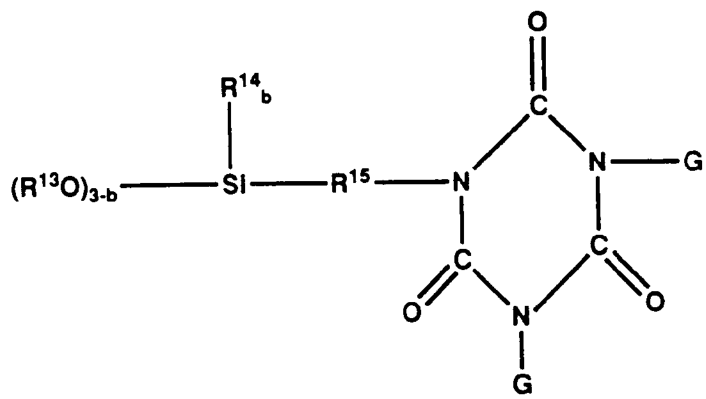

wherein G is selected from $R^{11}$ radicals, radicals of the formula

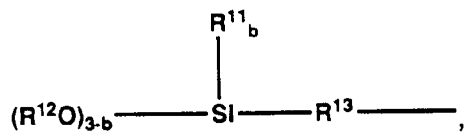

styryl, vinyl, allyl, chloroallyl, and cyclohexenyl radicals, where $R^{13}$ is a $C_{1-8}$ monovalent hydrocarbon radical or cyanoalkyl radical, $R^{14}$ is a $C_{1-8}$ monovalent hydrocarbon radical or cyanoalkyl radical, $R^{15}$ is a $C_{2-12}$ divalent hydrocarbon radical selected from alkylenearylene, alkylene, and cycloalkylene and halogenated alkylenearylene, alkylene and cycloalkylene and where b varies from 0 to 3.

For more information as to such compounds, one is referred to the disclosure of Beers, U.S. Patent No. 4,100,129, Berger, U.S. Patent No. 3,821,218, and Lucas et al., U.S. Patent Nos. 4,483,973 and 4,528,353, which are hereby incorporated by reference herein.

The most preferred adhesion promoter within formula (VI) is 1,3,5-tristrimethoxysilylpropylisocyanurate. This compound can be prepared by taking the corresponding alkoxy hydride silane and reacting it with the unsaturated isocyanurate or cyanurate in the presence of a platinum catalyst whereupon the hydride adds on to the unsaturated group such as the allyl group of the isocyanurate nucleus. The radical $R^{14}$ can be selected from any divalent hydrocarbon radical substituted or unsubstituted so long as it does not interfere with the adhesion promoter activities of the compound. It should be noted that highly complicated compounds are not desired as they are more difficult and thus more expensive to prepare and obtain. Other specific compounds within the scope of formula (VI) above are as follows:

bis-1,3-trimethoxysilylpropylisocyanurate
1,3,5-tristrimethoxysilylethylisocyanurate
1,3,5-trismethyldimethoxysilylpropylisocyanurate
1,3,5-trismethyldiethoxysilylpropylisocyanurate

The isocyanato-functional alkoxysilane co-adhesion promoter can be present in the RTV compositions of this invention in an amount within the range of from about 0 to about 2.0, preferably from about 0.1 to about 1.0, and most preferably from about 0.3 to about 0.7, parts by weight per 100 parts of the polyalkoxy-functional polydiorganosiloxane (A).

The RTV composition of this invention also optionally contains (F) is a crosslinking polyalkoxy silane, which preferably has the general formula:

(VII)

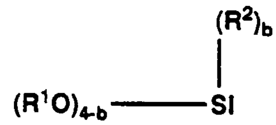

wherein $R^1$, $R^2$, and b are as defined previously herein.

Illustrative compounds represented by formula (VII) above include methyltrimethoxysilane, methyltriethoxysilane, ethyltrimethoxysilane, tetraethoxysilane, and vinyltrimethoxysilane. Methyltrimethoxysilane is preferred.

The crosslinking polyalkoxysilane can be present in the RTV compositions of this invention in an amount within the range of from about 0 to about 10, preferably from about 0.3 to about 2.0, and most preferably from about 0.5 to about 1.0, parts by weight per 100 parts of the polyalkoxy-functional polydiorganosiloxane (A).

Preferably, the RTV composition of this invention further contains filler (G). Various fillers can be incorporated into the composition of the present invention such as, for example, titanium dioxide, zirconium silicate, silica aerogel, iron oxide, diatomaceous earth, fumed silica, carbon black, precipitated silica, glass fibers, polyvinyl chloride, ground quartz, calcium carbonate, and the like. The preferred filler for use in the composition of this invention is a reinforcing filler and most preferably fumed silica filler.

The amount of filler used can vary within wide limits in accordance with the intended use. For example, in some sealant applications, the curable compositions of the present invention can be used free of filler. In other applications, such as employment of the curable compositions for making binding material, as much as 700 parts or more of filler per 100 parts by weight of the polyalkoxy-terminated polydiorganosiloxane (A).

The compositions of the present invention also can be used as construction sealants and caulking compounds. The exact amount of filler, therefore, will depend upon such factors as the application for which the composition is intended and the type of filler used. Preferably, from about 5 to about 300 parts of filler, which can include up to about 40 parts, and preferably from about 5 to about 20 parts, of reinforcing filler, such as fumed silica filler, per 100 parts of organopolysiloxane (A) is used.

It is frequently advantageous to pretreat a silica filler with an activating agent such as octamethylcyclotetrasiloxane.

Preferably, the RTV composition of the present invention further comprises (H) a cyano-functional polyalkoxy silane as a processing aid, wherein it is used to treat the filler so as to provide the RTV composition with improved application rate and thixotropy properties. Cyano-functional polyalkoxy silanes suitable for use in the present invention may have the general formula:

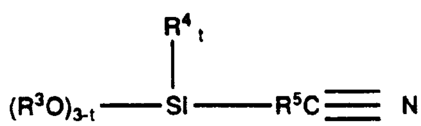

wherein each $R^3$ and $R^4$ is independently a monovalent hydrocarbon or substituted hydrocarbon radical having from 1 to about 18 carbon atoms, $R^5$ is a $C_{(2-12)}$ divalent hydrocarbon radical, and "t" is a number ranging from about 0 to about 3.

In the compound of formula (VII), $R^3$ and $R^4$ can be alkyl radicals, e.g., methyl, ethyl, propyl, and the like; alkenyl radicals, e.g., vinyl, allyl, and the like; cycloalkyl radicals, e.g., cyclohexyl, cycloheptyl, and the like; mononuclear aryl radicals, e.g., methyl-phenyl and the like; and fluoroalkyl radicals, e.g., 3,3,3-trifluoropropyl. Preferably, $R^3$ and $R^4$ are preferably selected from methyl or ethyl, and most preferably are both methyl. $R^5$ is preferably an alkylene or arylene substituted or unsubstituted divalent hydrocarbon radical of 2-12 carbon atoms and more preferably from 2-8 carbon atoms.

A preferred specific compound within the scope of formula (VII) above is gamma-cyanopropyltrimethoxysilane. Other specific compounds include

3-(cyanoethoxy)-3-methylbutenyltrimethoxysilane
beta-cyanoethylmethyldimethoxysilane
beta-cyanoethyltriethoxysilane
beta-cyanoethyltrimethoxysilane

2-cyanoethylmethyldiethoxysilane
3-cyanopropyltriethoxysilane
cyanopropylmethyldimethoxysilane
1-cyanoethyltris(methoxyethoxy)silane.

Methods for preparing the compounds within the scope of formula (VII) are disclosed, for example, in U.S. Patent Nos. 4,483,973 and 4,528,353, both to Lucas et al., which are both hereby incorporated by reference herein. These compounds can be prepared by reacting an olefinic cyanide with a trichlorohydride silane in the presence of a platinum catalyst to produce the desired intermediate and then alkoxylating this intermediate so as to produce the preferable gamma-cyanopropyltrimethoxysilane. Accordingly, one specific type of reaction could be, for instance, allyl cyanide reacted with trichlorosilane In this reaction, the chlorosilane is reacted with the cyanide, otherwise, since the methoxy group will react with the cyanide group to lower the yield of the desired product if the methoxylated intermediate is used in the addition reaction with the platinum catalyst.

The preferred cyano-functional polyalkoxy silane for use in the composition of this invention is cyanoalkyltrialkoxysilane and most preferably cyanoethyltrimethoxysilane.

The cyano-functional polyalkoxy silane can be used in the composition of this invention in an amount ranging from about 0 to about 5, preferably from about 0.1 to about 1.0, and most preferably from about 0.3 to about 0.7, parts per 100 parts of the polyalkoxy-terminated polydiorganosiloxane (A).

The composition of the present invention may further contain from about 1 to about 50 parts by weight of a triorganosilyl endstopped diorganopolysiloxane (I) having a viscosity of from 10 to 5000 centipoise at 25°C., where the organo groups are monovalent hydrocarbon radicals, preferably of from 1 to 8 carbon atoms. Such linear diorganopolysiloxane polymers are useful as plasticizers. Preferably, such plasticizers are free of silanol groups but usually there is present up to about 500 ppm of silanol groups. It is also preferable that the organo substituent groups are methyl and that the viscosity range from 10 to 1000 centipoise at 25°C.

In place of, or in addition to, the foregoing plasticizer it is desirable to further include in the room temperature vulcanizable composition of the present invention from 1 to 20 parts by weight of a fluid siloxane containing a high degree of trifunctionality, tetrafunctionality or a mixture of tri and tetrafunctionality ("MDT" silicone fluid). Generally, such plasticizers comprise (i) from 25 to 60 mole percent of monoalkylsiloxy units, siloxy units, or mixtures thereof, (ii) from 1 to 6 mole percent of trialkylsiloxy units and (iii) from 34 to 74 mole percent of dialkylsiloxy units, and wherein the plasticizer fluid contains from about 0.1 to about 2 percent by weight of silicon bonded hydroxyl units.

Other compounds, for example, flame retardants such as platinum, may also be included in the composition of the present invention.

The RTV compositions of the present invention may be prepared by methods known in the art. For example, they may be prepared by mixing all the ingredients together at the same time. Preferably, they are prepared by rigorously blending a mixture of the polyalkoxy-terminated polymer, the cyano-functional polyalkoxy silane, and filler. Afterwards, the crosslinker, tin catalyst, stabilizer/scavenger, adhesion promoter, and other ingredients, e.g., plasticizer, are added separately or together, followed by thorough mixing under anhydrous conditions.

The RTV compositions may be coated on a variety of substrates, particularly masonry substrates. Examples of suitable substrates include aluminum, glass, polyacrylate, polycarbonate, polyvinylchloride, and concrete.

The Examples given below are provided for the purpose of illustrating the present invention. They are not given for any purpose of setting limits or boundaries to the instant invention. All parts in the Examples are by weight.

## Experimental

### Example 1

Endcapped polydimethylsilicone polymer was prepared by mixing the following ingredients in a 5-1 resin kettle fitted with heating mantle, mechanical agitator, and nitrogen purge:

Hydroxy-terminated polydimethylsilicone polymer having a viscosity of 110,000 centipoise at 25°C - 100 parts by weight

methyltrimethoxysilane - 2.0 parts
dibutylamine - 0.10 parts
acetic acid - 0.05 parts

The mixture was heated to 80°C and mixed for 30 minutes. Hexamethyldisilazane (0.5 parts by weight) was then added. The resulting mixture was then mixed for 30 minutes at 80°C. The agitator was stopped and

the reaction mixture was allowed to cool to room temperature. The silicone polymer was found by $Si^{29}$ FTNMR analysis to be endcapped with $CH_3(CH_3O)_2Si$- groups. The endcapped polymer had a final room temperature viscosity of 130,000 centipoise at 25°C.

Example 2

The dimethylmethoxy terminated, dimethyl polysiloxane low modulus additive was prepared by an initial reaction of 100 parts by weight of dimethyldichlorosilane with a blend comprised of 26 parts by weight of acetone and 10 parts by weight of water in a 5-1 resin kettle equipped for agitation and an outlet for the evolution of HCl.

While vigorously agitating the dimethyldichlorosilane, the acetone/water blend was slowly added. Temperature of the reaction decreased during this addition but was not allowed to drop below 5°C. HCl was continually vented off. After the acetone/water addition was completed, the reaction was agitated for 30 minutes at a temperature of 40-50°C. The reaction mix was vacuum stripped at 100-125°C at 20-30 mmHg. pressure to give a low molecular weight, dimethylchloro, dimethyl silicone oil.

While stirring constantly and maintaining the batch temperature below 40°C, 47 parts by weight of methanol was slowly added to 100 parts by weight of the above dimethylchlorostopped dimethyl silicone oil. After stirring for 1 hour at or below 40°C, the liquid phases were separated. The lower phase was the silicone oil. The batch was then vacuum stripped up to 80°C at 30-40 mmHg. One part by weight of $NaHCO_3$ and Norite FQA were added to neutralize and decolorize the batch. The batch was then cooled to below 50°C and filtered to give a low molecular weight, dimethylmethoxy terminated, dimethyl silicone oil having the following properties:

| Property | Value |
|---|---|
| Clarity | Clear, water white |
| Gardner Color | 1 max. |
| Silanol Content | 0.4% max. |
| % Chlorine | 0.008% max. |
| Methoxy Content | 5.5-8.0% |
| Viscosity (25°C) | 5-11 centistokes |
| Refractive Index, 20°C | 1.3990-1.402 |

In the examples below, the compositions prepared therein were tested for cured and uncured ASTM physical properties, accelerated shelf stability and low modulus properties (per ISO 8339-1984E and 8340-1984E). ASTM physical properties were measured after a 7 day cure at 72°C and 50% relative humidity (standard curing conditions). Accelerated shelf age ASTM physical properties were measured after heating the uncured sealant for 24 hours at 100°C followed by a 7 day cure at standard conditions. ISO low modulus properties were measured after a 28 day cure, at standard conditions, followed by a 4 day water soak with a 24 hour drying period, at standard conditions.

Example 3

Example 3 illustrates the batch preparation of the composition of this invention using a 1-gallon Baker-Pectins change can mixer. The batch was maintained at 50-60°C at all times.

1000 grams of the polymer prepared in Example 1 were charged to the mixer followed by 10 grams of cyanoethyltrimethoxysilane. The batch was mixed at slow speed for 10 minutes. 330 grams of $D_4$ treated fumed silica were added to the batch in three equal portions. The batch was mixed for 15 minutes between filler additions. The batch was mixed for 30 minutes after the final filler addition. 1000 grams of the polymer prepared in Example 1 was charged to the mixer and the resulting mixture was mixed for 15 minutes. 400 grams of the low modulus additive prepared in Example 2 and 200 grams of "MDT" silicone fluid were added and the resulting mixture was agitated for 30 minutes. The batch was then de-aired at 60 mmHg for 10 minutes to provide the RTV base.

A Semco Catalyzer was then used to blend the following ingredients with 2400 grams of the RTV base:

methyltrimethoxysilane 24 grams
glycidoxypropyltrimethoxysilane 7.2 grams
hexamethyldisilazane 12 grams
tris-trimethoxysilylpropyl-isocyanurate 12 grams
$Bu_2Sn(AcAc)_2$ 7.2 grams

Test results are presented in Table 1.

Example 4

The procedure of Example 3 was repeated except that the low modulus additive prepared in Example 2 was omitted. In Example 4, 400 grams of a trimethyl stopped, dimethyl oil having a viscosity of 100 centipoise at 25°C was used. The results are given in Table 1.

Example 5

The procedure of Example 3 was repeated except that the fumed silica was replaced with 1200 grams of a stearic acid treated calcium carbonate filler. Test results are given in Table 1.

Example 6

The procedure of Example 5 was repeated except that the low modulus additive was omitted. Test results are given in Table 1.

TABLE 1

Properties: Examples 3-6

| Property | Example 3 | Example 4 | Example 5 | Example 6 |
|---|---|---|---|---|
| Specific Gravity | 1.030 | 1.030 | 1.40 | 1.40 |
| Application Rate (g/min) | 110 | 120 | 165 | 175 |
| Boeing Flow (in) | 0.05 | 0.05 | 0.10 | 0.10 |
| Tack Free Time (min) | 20 | 20 | 20 | 20 |
| ASTM Sheet Physicals (7 day cure) | | | | |
| Shore A | 15 | 17 | 21 | 22 |
| Tensile (psi) | 180 | 210 | 185 | 195 |
| Elongation (%) | 635 | 405 | 805 | 510 |
| TS at 150% (psi) | 31 | 61 | 35 | 59 |
| Accelerated Aged Physicals (7 day cure) | | | | |
| Shore A | 15 | 17 | 20 | 22 |
| Tensile (psi) | 175 | 215 | 190 | 180 |
| Elongation (%) | 690 | 400 | 795 | 500 |
| ISO Glass Testing | | | | |
| TS at 100% (psi) | 21 | 49 | 20 | 51 |
| Elongation (%) | 410 | 145 | 490 | 205 |
| ISO Aluminum Testing | | | | |
| TS at 100% (psi) | 21 | 45 | 24 | 41 |
| Elongation (%) | 400 | 150 | 510 | 275 |
| ISO Concrete Testing | | | | |
| TS at 100% (psi) | 18 | 41 | 23 | 44 |
| Elongation (%) | 475 | 125 | 535 | 200 |

**Claims**

**1.** A shelf-stable scavenger reduced, one-component room temperature vulcanizable silicone composition having improved low modulus properties, comprising:

(A) 100 parts of a polyalkoxy-terminated polydiorgano-siloxane having a viscosity of from about 100 to about 1,000,000 centipoise at 25°C, wherein the silicon atoms at each polymer chain end is terminated with at least two alkoxy radicals, the organic group being a $C_{1-15}$ monovalent hydrocarbon radical;

(B) from about 1 to about 40 parts of a monoalkoxy-terminated polydiorganosiloxane polymer having on each terminal silicon atom in the polymer chain just one alkoxy group and having a viscosity varying in the range of from about 5 to about 95 centipoise at 25°C, the organo group being a monovalent

$C_{1-15}$ hydrocarbon radical;

(C) an effective amount of a diorganotin bis beta-diketonate condensation catalyst of the general formula:

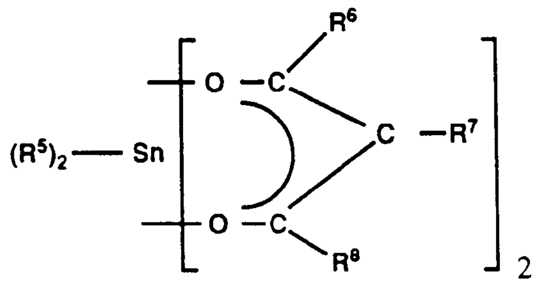

wherein $R^5$ is selected from $C_{(1-18)}$ monovalent hydrocarbon radicals and substituted monovalent hydrocarbon radicals, and $R^6$, $R^7$, and $R^8$ are the same or different monovalent radicals selected from the class consisting of hydrogen, $R^5$, $OR^5$, $-Si(R^5)_3$, $-OSi(R^5)_3$, aryl, acyl, and nitrile;

(D) from about 0.1 to about 1.0 part of a scavenger compound for hydroxy-functional groups;

(E) from 0 to about 2 parts of an adhesion promoting polyalkoxysilane having the formula

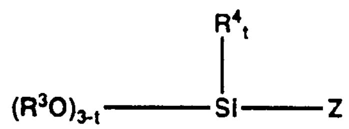

wherein $R^3$ and $R^4$ are $C_{(1-8)}$ monovalent hydrocarbon radicals, "t" varies from 0 to 3, and Z is a saturated, unsaturated or aromatic hydrocarbon radical, the radical being further functionalized by a member selected from the group consisting of ether, epoxy, isocyanato, cyano, isocyanurate, acryloxy and acyloxy;

(F) 0 to about 10 parts of a crosslinking polyalkoxy silane.

2. A composition according to claim 1 wherein the monoalkoxy-terminated polymer has the formula

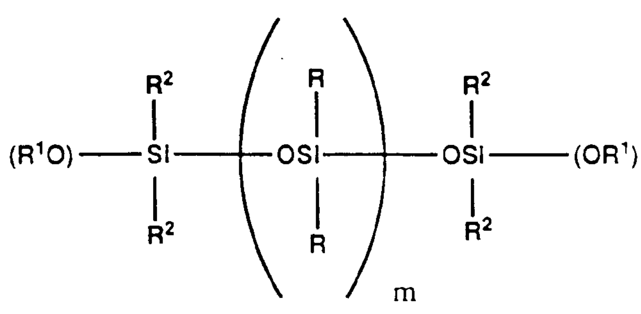

wherein "m" ranges from about 1 to about 40.

3. A composition according to claim 1 wherein the viscosity of the monoalkoxy-terminated polydiorganosiloxane ranges from abort 10 to about 80 centipoise at 25°C.

4. A composition according to claim 1 wherein the scavenger is a silicon-nitrogen compound selected from the class consisting of:

(a) a silicone-nitrogen compound having the formula

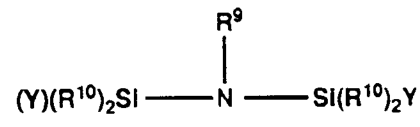

where Y is selected from $R^{10}$ and $(R^9)_2N$-; and

(b) A silicon-nitrogen polymer comprising (1) from 3 to 100 mole percent chemically combined structural units selected from the class consisting of units having the formulae

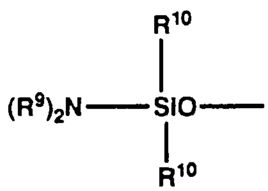 , 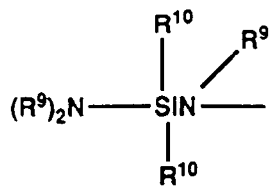 ,

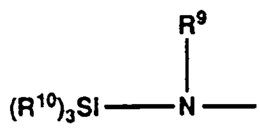 , 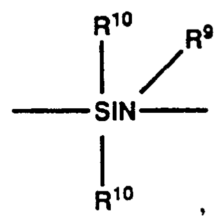 ,

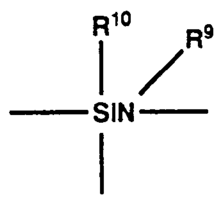 , and 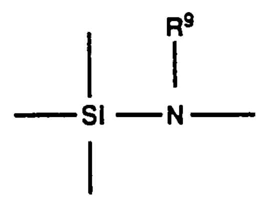

and (2) from 0 to 97 mole percent chemically combined structural units represented by the formula

$$(R^{10})_cSiO_{(4-c/2)}$$

where the silicon atoms of the silicon-nitrogen polymer are joined to each other by a member selected from a SiOSi linkage and a $SiNR^9Si$ linkage, the free valences of the silicon atoms other than those joined to oxygen to form a siloxy unit and nitrogen to form a silazy unit are joined to a member selected from an $R^{10}$ radical and an $(R^9)_2N$ radical, and where the ratio of the sum of the $R^{10}$ radicals and the $(R^9)_2N$ radicals to the silicon atoms of the silicon-nitrogen polymer has a value of 1.5 to 3, inclusive, and $R^9$ is a member selected from the group consisting of hydrogen, monovalent hydrocarbon radicals, and fluoroalkyl radicals, $R^{10}$ is a member selected from the group consisting of hydrogen, monovalent hydrocarbon radicals, and fluoroalkyl radicals, and c is a whole number equal to 0 to 3, inclusive.

5. A composition according to claim 1 wherein the adhesion promoting polyalkoxysilane is an isocyanato-functional polyalkoxysilane having the general formula

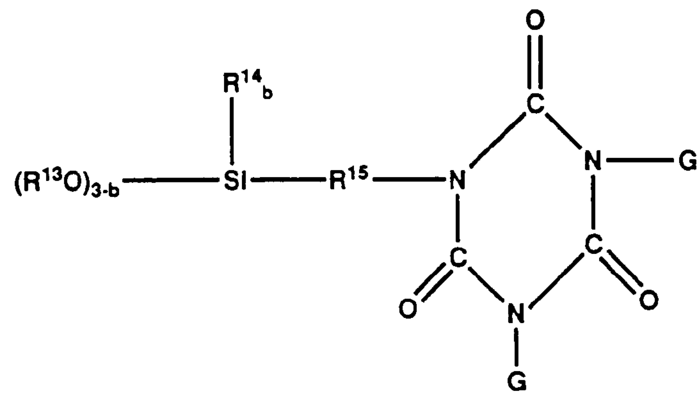

wherein G is selected from $R^{11}$ radicals, radicals of the formula

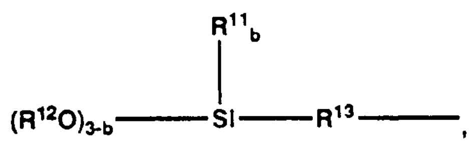

styryl, vinyl, allyl, chloroallyl, and cyclohexenyl radicals, where $R^{13}$ is a $C_{1-8}$ monovalent hydrocarbon radical or cyanoalkyl radical, $R^{14}$ is a $C_{1-8}$ monovalent hydrocarbon radical or cyanoalkyl radical, $R^{15}$ is a $C_{2-12}$ divalent hydrocarbon radical selected from alkylenearylene, alkylene, and cycloalkylene and halogenated alkylenearylene, alkylene and cycloalkylene and where b varies from 0 to 3.

6. A composition according to claim 1 further comprising (H) from 0 to 2 parts of a cyano-functional polyalkoxysilane having the general formula:

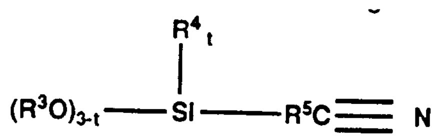

wherein each $R^3$ and $R^4$ is independently a monovalent hydrocarbon or substituted hydrocarbon radical having from 1 to about 18 carbon atoms, $R^5$ is a $C_{(2-12)}$ divalent hydrocarbon radical, and "t" is a number ranging from about 0 to about 3.

7. A composition according to claim 1 further comprising filler.

8. A composition according to claim 1 wherein the crosslinking polyalkoxy silane is present in an amount ranging from about 0.3 to about 2.0 parts.

9. A composition according to claim 1 further comprising from about 1 to about 50 parts by weight of a triorganosilyl endstopped diorgano-polysiloxane having a viscosity of from 10 to 5000 centipoise at 25°C., where the organo groups are monovalent hydrocarbon radicals.

10. A composition according to claim 1 further comprising from 1 to 20 parts by weight of a fluid siloxane comprising (i) from 25 to 60 mole percent of monoalkylsiloxy units, siloxy units, or mixtures thereof, (ii) from 1 to 6 mole percent of trialkylsiloxy units and (iii) from 34 to 74 mole percent of dialkylsiloxy units, and wherein the plasticizer fluid contains from about 0.1 to about 2 percent by weight of silicon bonded hydroxyl units.

11. A shelf stable, one-component room temperature vulcanizable silicone composition having improved primerless adhesion properties, comprising by weight:

(A) 100 parts of a having a polyalkoxy-terminated polydiorganosiloxane having a viscosity of from about 100 to about 1,000,000 centipoise at 25°C., the polyalkoxy-terminated polydiorganosiloxane having the general formula:

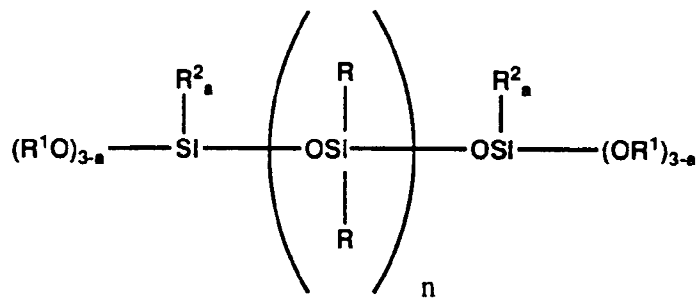

wherein each R, $R^1$, and $R^2$ is methyl, n is a whole number ranging from about 50 to about 2,500, and "a" is a whole number which is either 0 or 1;

(B) from about 15 to about 25 parts of a monoalkoxy-terminated polydiorganosiloxane polymer having a viscosity varying in the range of from about 40 to about 60 centipoise at 25°C., the monoalkoxy-terminated polymer having the formula

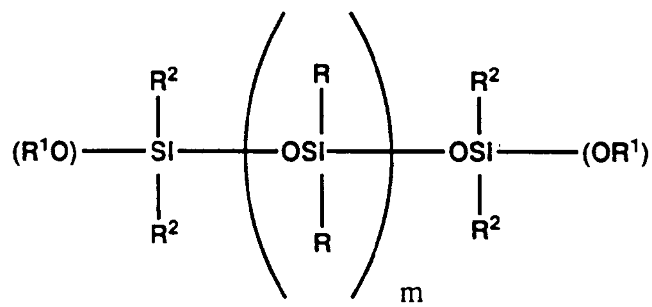

wherein R, $R^1$, and $R^2$ are each methyl, and "m" ranges from about 10 to about 20;

(C) from about 0.2 to about 0.4 parts of di(n-butyl)tinbis-(acetylacetonate);

(D) from about 0.5 to about 0.7 parts of hexamethyldisilazane;

(E) from about 0.3 to about 0.7 parts of a 1,3,5-tristrimethoxysilylpropylisocyanate;

(F) from about 0.5 to about 1.0 part of a methyltrimethoxysilane;

(G) from about 5 to about 20 parts of fumed silica filler;

(H) from about 0.3 to about 0.7 parts of beta-cyanoethyltrimethoxysilane; and

(I) from 1 to 20 parts by weight of a fluid siloxane comprising (i) from 25 to 60 mole percent of monoalkylsiloxy units, siloxy units, or mixtures thereof, (ii) from 1 to 6 mole percent of trialkylsiloxy units and (iii) from 34 to 74 mole percent of dialkylsiloxy units, and wherein the plasticizer fluid contains from about 0.1 to about 2 percent by weight of silicon bonded hydroxyl units.

European Patent Office

# EUROPEAN SEARCH REPORT

Application Number

EP 91 31 1105

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 113 849 (GENERAL ELECTRIC) * Page 33, lines 25-28; page 43, lines 20-21; claims 1,9,10 * & US-A-4 670 532 (Cat. D) | 1-11 | C 08 K 5/57<br>C 08 L 83/04 |
| Y | EP-A-0 235 049 (RHONE-POULENC) * Page 22, lines 21-25; page 23, lines 4-5; page 29, lines 24-31; page 39, lines 20-35; claim 1 * | 1-11 | |
| Y | EP-A-0 304 701 (GENERAL ELECTRIC) * Claims 14,15,20 * & US-A-4 863 992 (Cat. D) | 1-11 | |
| | | | TECHNICAL FIELDS SEARCHED (Int. Cl.5) |
| | | | C 08 K<br>C 08 L |

The present search report has been drawn up for all claims

| Place of search | Date of completion of the search | Examiner |
|---|---|---|
| THE HAGUE | 05-03-1992 | LENTZ J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)